# EUROPÄISCHE PATENTSCHRIFT

(11) **EP 1 561 053 B1**
(45) Veröffentlichungstag und Bekanntmachung des Hinweises auf die Patenterteilung: **29.03.2006**
(21) Anmeldenummer: 03775306.8
(22) Anmeldetag: 06.11.2003
(51) Int. Cl.: F16H 61/16, F16H 61/02

(54) **ELEKTRO-PNEUMATISCHE SCHALTEINHEIT**
ELECTRO-PNEUMATIC SWITCHING UNIT
UNIT LECTRO-PNEUMATIQUE DE CHANGEMENT DE VITESSE

(30) Priorität: 12.11.2002 DE 10252429
(43) Veröffentlichungstag der Anmeldung: 10.08.2005
(73) Patentinhaber: ZF FRIEDRICHSHAFEN AG, 88038 Friedrichshafen (DE)
(72) Erfinder: FISCHER, Dieter, 88149 Nonnenhorn (DE)
(86) Internationale Anmeldenummer: PCT/EP2003/012371
(87) Internationale Veröffentlichungsnummer: WO 2004/044462

(56) Entgegenhaltungen:
- DE-A- 2 040 195
- DE-A- 2 502 445
- DE-A- 3 141 271
- DE-A- 10 029 497

## Beschreibung

Die Erfindung betrifft eine elektro-pneumatische Schalteinheit nach dem Oberbegriff des Anspruchs 1.

Getriebe von größeren Nutzfahrzeugen sind in einen Hauptgetriebeteil, ein Splitgruppengetriebe und ein Bereichsgruppengetriebe aufgeteilt. Moderne Getriebe vor allem in Nutzfahrzeugen weisen dabei eine durch eine Pneumatik unterstützte Schalteinrichtung auf, die pneumatische Schaltungen im Splitgruppengetriebe und im Bereichsgruppengetriebe durchführt, während die Schaltungen im Hauptgetriebeteil manuell vom Fahrzeugführer durchgeführt werden und dabei in der ausübenden Kraft durch die Pneumatik unterstützt werden können.

Zur Steuerung von heute üblichen Kraftfahrzeuggetrieben werden in zunehmendem Maße elektronische Anordnungen vorgesehen. Diese Anordnungen dienen, neben anderen Zwecken, auch der Verhinderung von Schaltungen im Getriebe, die auf Grund sonstiger Bedingungen, wie insbesondere zu hoher Fahrzeuggeschwindigkeit bezogen auf den zu schalten beabsichtigten Gang, nicht zulässig sind.

Aus der gattungsgemässen De 100 29 497 A1 ist eine elektro-pneumatische Schalteinheit für ein vielgängiges Fahrzeuggetriebe bekannt geworden, bei der mit einer Vielzahl von gesteuerten Ventilen das aus mehreren Baugruppen geschaltet wird und gleichzeitig zur vermeidung von Fehlfunktionen elektronisch überwacht wird. Dazu werden die Ventile von einem zentralen Fahrzeugführungsrechner angesteuert. Der Offenbarungsgehalt der DE 100 29 497 A1 soll vollinhaltlich auch Gegenstand dieser Beschreibung sein. Eine Beeinflussung der unterstützenden Kraft findet nicht statt.

Der vorliegenden Erfindung liegt die Aufgabe zugrunde, eine pneumatische Schalteinrichtung zu schaffen, die bestehende Anordnungen vereinfacht.

Die Aufgabe wird gelöst mit den Merkmalen des Anspruchs 1. Eine Ausgestaltung ist Gegenstand des Unteranspruchs.

Eine elektro-pneumatische Schalteinheit für ein Fahrzeuggetriebe weist ein über Ventile pneumatisch geschaltetes Splitgruppengetriebe und ein über Ventile pneumatisch geschaltetes Bereichsgruppengetriebe auf, deren Schaltungen manuell vom Fahrzeugführer an einem Schalthebel vorwählbarsind. Ferner weist die Schalteinheit eine Sperreinrichtung zur mechanischen Unterbindung der manuellen Schaltung nicht zulässiger Übersetzungsverhältnisse und eine Einrichtung zur Unterbindung der pneumatischen Schaltung nicht zulässiger Übersetzungsverhältnisse des Fahrzeuggetriebes auf, sowie eine elektronische Steuereinrichtung. Die Sperreinrichtung zur mechanischen Unterbindung der manuellen Schaltung nicht zulässiger Übersetzungsverhältnisse des Fahrzeuggetriebes ist pneumatisch mit einem Ventil zur Schaltung des Bereichsgruppengetriebes verbunden. Dadurch lässt sich gegenüber bisheriger Schalteinheiten ein pneumatisches Ventil zusammen mit seiner Ansteuerung einsparen und der dafür ansonsten vorzusehende Platz in der Schalteinheit kann eingespart werden. In der Steuereinrichtung kann der ansonsten dafür vorzusehende Anschluss entfallen, was einen Kostenvorteil beinhaltet. Vorzugsweise ist dieses Ventil das Ventil für die Schaltung der langsame Stellung des Bereichsgruppengetriebes.

Die Erfindung wird anhand einer zeichnung näher erläutert.

Es zeigen:
Fig. 1 eine schematische Darstellung mit Anordnung des Getriebes;
Fig. 2 einen typischen Schaltgriff mit Schaltbild;
Fig. 3 eine erste Ausgestaltung der Schalteinheit mit Kupplungsauslöseventil;
Fig. 4 eine zweite Ausgestaltung der Schalteinheit mit Kupplungsauslöseschalter;

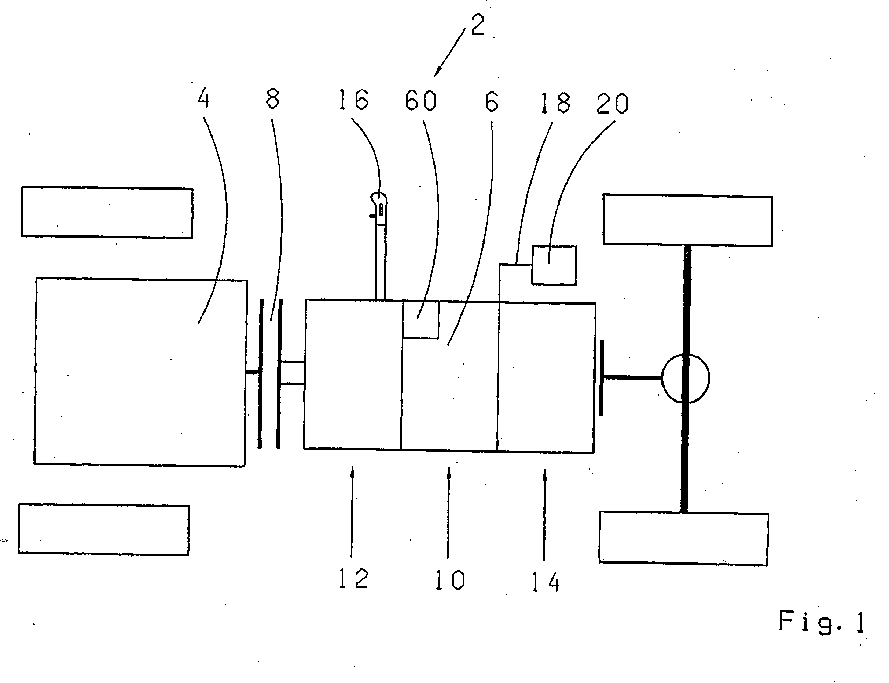

Die Fig. 1 zeigt ein Fahrzeug 2 mit einer Antriebsmaschine 4, einem Getriebe 6 und einer dazwischen angeordnete Kupplung 8. Das Getriebe 6 weist einen Hauptgetriebeteil 10, ein Splitgruppengetriebe 12 und ein Bereichsgruppengetriebe 14 auf. Der Hauptgetriebeteil 10 wird manuell durch den Schalthebel 16 geschaltet. Das Getriebe 6 ist über Verbindungsleitungen 18 mit einer elektronischen Steuereinrichtung 20 verbunden.

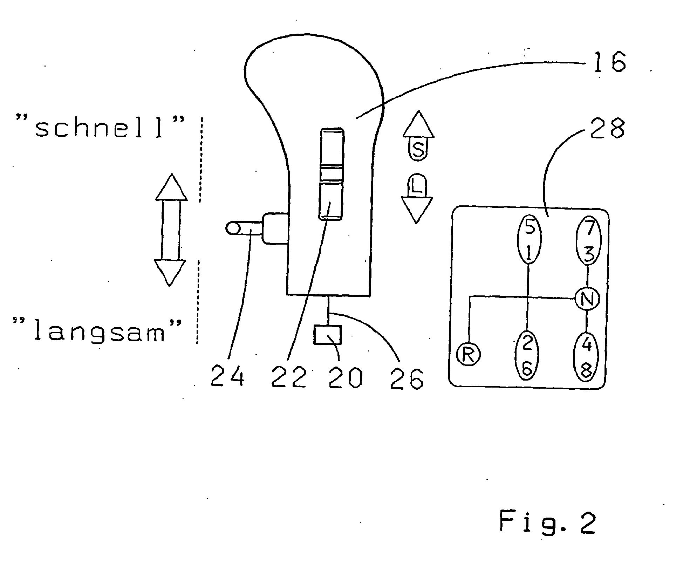

Die Fig. 2 zeigt einen beispielhaften Schalthebel 16 in einer vergrößerten Darstellung für ein Schaltbild 28, das als "Überlagertes-H" bezeichnet wird. Seitlich am Schalthebel 16 ist ein Kippschalter 22 zur Vorwahl der Schaltung des Splitgruppengetriebes 12 angeordnet. An der Vorderseite des Schalthebels 16 ist ein weiterer Kippschalter 24 vorgesehen, über den das Bereichsgruppengetriebe 14 geschaltet wird. Bei beiden Kippschaltern 22, 24 handelt es sich um elektrische Schalter, die über eine elektrische Verbindungsleitung 26 mit der Steuereinrichtung 20 verbunden sind. Bei einer Schaltung mit einem Schaltbild 28 ist in den Vorwärtsgängen jede Endstellung des Schalthebels 16 zwei Übersetzungsstufen zugeordnet, die sich jeweils um den Übersetzungssprung des Bereichsgruppengetriebes 14 unterscheiden. Bei der Kipphebelstellung "langsam" sind die Übersetzungsverhältnisse eins bis vier und der Rückwärtsgang geschaltet, bei Kipphebelstellung "schnell" sind die Gänge fünf bis acht geschaltet. Die Neutralstellung des Hauptgetriebeteils 10 befindet sich in der Gasse zwischen den Übersetzungsverhältnissen drei und vier bzw. sieben und acht.

Den Wechsel des Bereichsgruppengetriebes 14 muss der Fahrzeugführer mittels des Kippschalters 24 am Schalthebel 16 vorwählen. Der Wechsel wird ausgeführt, sobald im Hauptgetriebeteil 10 manuell die Neutralstellung eingelegt wird.

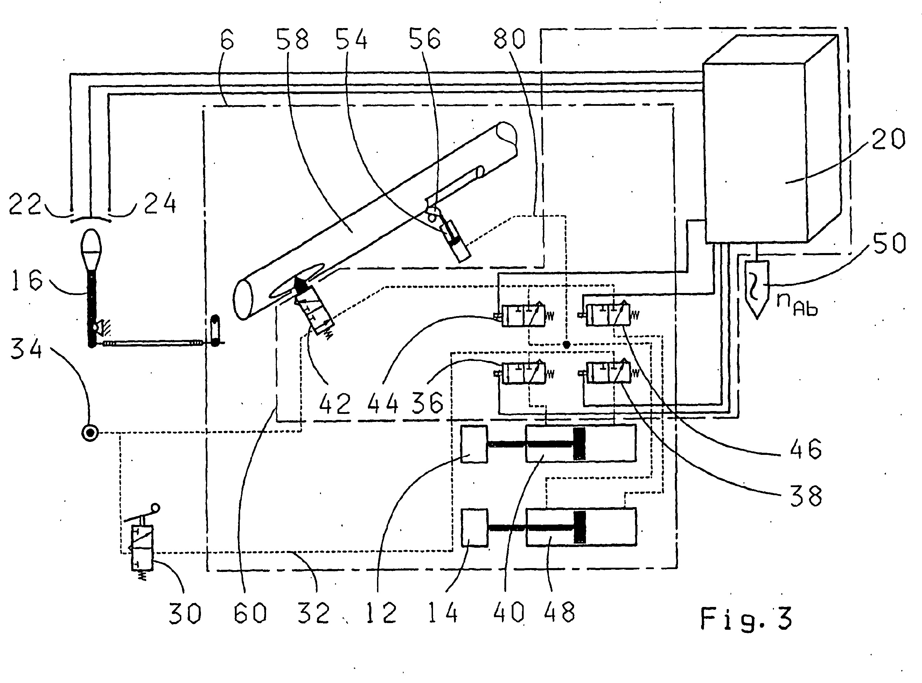

Das Splitgruppengetriebe 12 wird in den Positionen "L" oder "S" mit dem Kippschalter 22 seitlich am Schalthebel 16 vorgewählt und durch die Betätigung der Kupplung 8 geschaltet. Dazu zeigt die Fig. 3 ein pneumatisches Kupplungsauslöseventil 30, das in einer Leitung 32 zwischen einem Luftvorrat 34 und zwei elektropneumatischen 3/2-Wege-Venti-len 36 und 38 angeordnet ist. Das Kupplungsauslöseventil 30 lässt nur Luft zu den Ventilen 36 und 38 zu, wenn das Kupplungspedal betätigt wird. Die Ventile 36 und 38 sind mit der elektronischen Steuereinrichtung 20 verbunden und werden in Abhängigkeit der Schalterstellung des Kippschalters 22 am Schalthebel 16 angesteuert. Bei getretenem Kupplungspedal wird entweder Luft in die linke oder in die rechte Kammer des Schaltzylinders 40 des Splitgruppengetriebes 12 eingelassen, wobei dann die jeweils andere Kammer über die Ventile 36 bzw. 38 entlüftet wird.

Wie bereits ausgeführt muss der Fahrzeugführer den Wechsel des Bereichsgruppengetriebes 14 mittels des Kippschalters 24 am Schalthebel 16 vorwählen. Der Wechsel wird dann ausgeführt, sobald im Hauptgetriebeteil 10 manuell die Neutralstellung eingelegt wird. In der Neutralstellung gibt ein mechanisch an die Schaltbewegung gekoppeltes Hauptabschaltventil 42 die Luft vom Luftvorrat 34 frei zu zwei elektropneumatischen 3/2-Wege-Ventilen 44 und 46. Die Ventile 44 und 46 sind mit der elektronischen Steuereinrichtung 20 verbunden und werden in Abhängigkeit der Schalterstellung des Kippschalters 24 am Schalthebel 16 angesteuert. Bei Erkennen der Neutrallage durch das Hauptabschaltventil 42 wird über das jeweils angesteuerte Ventil 44 oder 46 entweder Luft in die linke oder in die rechte Kammer des Schaltzylinders 48 des Bereichsgruppengetriebes 14 eingelassen, wobei dann die jeweils andere Kammer über das nicht angesteuerte Ventil 46 bzw. 44 entlüftet wird.

Um Fehlschaltungen zu vermeiden, müssen in der Schalteinrichtung zusätzliche Absicherungen getroffen werden. Dazu ist ein Gassensperrzylinder 54 vorgesehen, der vorzugsweise in der langsamen Übersetzungsstufe des Bereichsgruppengetriebes oberhalb einer bestimmten Abtriebsdrehzahl des Getriebes 6 das Schalten von der rechten Schaltgasse des Schaltbildes 28 in die linke Schaltgasse verhindert, d.h. das Schalten von der dritten oder vierten Übersetzungsstufe in die erste oder zweite Übersetzungsstufe wird verhindert. Dies soll den Fahrzeugführer davor bewahren, irrtümlich in die erste statt in die fünfte Übersetzungsstufe zu schalten, wenn er vergessen hat, mit dem Kippschalter 24 die schnelle Übersetzung in dem Bereichsgruppengetriebe vorzuwählen. An dem Gassensperrzylinder 54 liegt nur dann Luft an, wenn das Hauptabschaltventil 42 in der Neutrallage des Hauptgetriebeteils 10 Luft zu den Ventilen 44 und 46 gelangen lässt und wenn dann das Ventil 44, das hier die langsame Stellung des Bereichsgruppengetriebe 14 einschalten soll, von der Steuereinrichtung 20 angesteuert wird. Mit dem Ausgang dieses Ventils ist der Gassensperrzylinder direkt verbunden. Befindet sich der Schalthebel 16 im Schaltbild 28 in der Stellung für die vierte Übersetzungsstufe, so befindet sich das Bereichsgruppengetriebe 14 in der langsamen Stellung. Die Abtriebsdrehzahl des Getriebes 6 wird von einem Sensor 50 erfasst und als Signal an die elektronische Steuereinrichtung 20 weitergegeben. Wird der Schalthebel 16 in die Neutrallage gebracht, strömt Luft über das Hauptabsperrventil 42 zu den Ventilen 44 und 46. Die Steuereinrichtung 20 gibt bei zu hoher Abtriebsdrehzahl ein Signal an das Ventil 44 ab, das öffnet und Luft über die Leitung 80 zu dem Gassensperrzylinder 54 gelangen lässt, dessen Stößel über einen Umlenkhebel 56 in die Schaltwelle 58 eingreift und diese in Richtung der rechten Schaltgasse des Schaltbildes 28 drückt. Wählt der Fahrzeugführer mit dem Kippschalter 24 die schnelle Übersetzung in dem Bereichsgruppengetriebe 14 vor, so schließt Ventil 44 und Ventil 46 wird geöffnet. Dadurch liegt dann keine Luft mehr am Gassensperrzylinder 54 an und der Schalthebel kann in die linke Schaltgasse im Schaltbild 28 geführt werden. Diese Anordnung ist vom Fahrzeugführer mit einem erhöhten Kraftaufwand überdrückbar und erlaubt somit in Extremsituationen das Schalten der Übersetzungsstufen in der linken Schaltgasse des Schaltbildes 28.

Eine Gruppensperre unterdrückt oberhalb einer vorgegebenen Fahrzeuggeschwindigkeit das Schalten des Bereichsgruppengetriebes 14 in die langsame Übersetzung und schützt sowohl die Synchronisierung des Bereichsgruppengetriebes 14 als auch die Synchronisierungen des Hauptgetriebeteils 10. Die Fahrzeuggeschwindigkeit wird über den Sensor 50 entsprechend der Getriebeabtriebsdrehzahl erfasst und als Signal an die Steuereinrichtung 20 weitergegeben. Die Steuereinrichtung 20 steuert in Abhängigkeit dieses Signals die Ventile 44 bzw. 46 an und lässt ein Schalten in die langsame Übersetzung nur bei Vorliegen entsprechender zulässiger Signale zu.

Die Ventile 36, 38, 42, 44, und 46 sind gemeinsam in einem Ventilblock 60 als einem gemeinsamen Gehäuse untergebracht, der unmittelbar an die Schaltwelle 58 des Getriebes 6 montiert wird. Dadurch ergibt sich eine kompakte Einheit eines Ventilblocks 60, der am Getriebe 6 angeordnet ist (Fig. 1). Durch die geringen Leitungslängen zwischen den einzelnen Ventilen ergeben sich vorteilhaft kurze Reaktionszeiten und Schaltzeiten. Die elektrische Verbindung zwischen Ventilblock 60 und Steuereinrichtung 20 kann über einen zentralen Elektroanschluß am Ventilblock 60 erfolgen. Der Ventilblock 60 kann an ein bestehendes Getriebe angeschlossen werden, ohne dass konstruktive Änderungen des Getriebes erforderlich sind. Der Gassensperrzylinder 54 wird unmittelbar neben den Ventilblock 60 angeordnet, so dass auch hier kurze Leitungslängen vorgesehen sind.

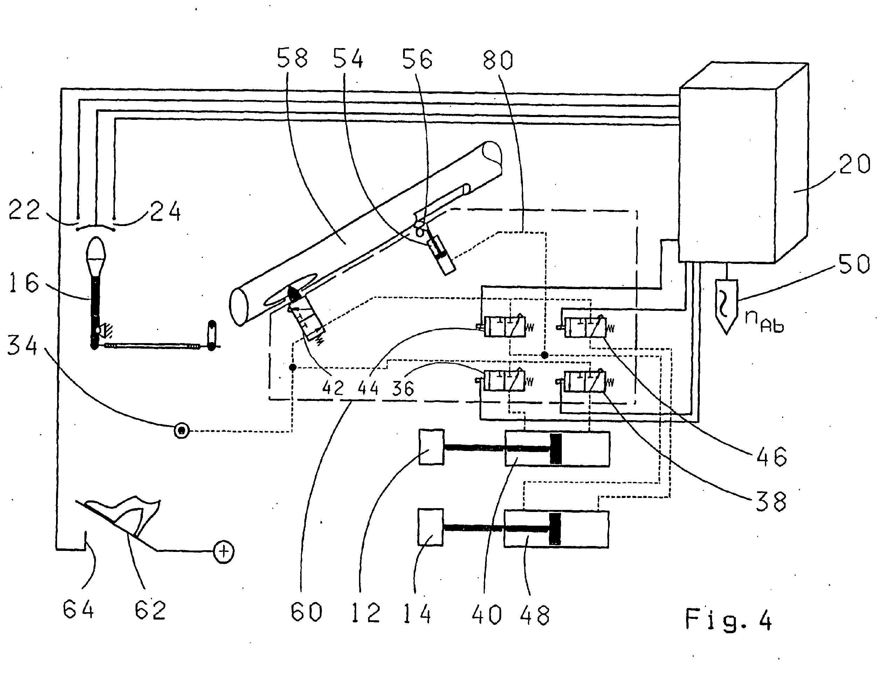

Die Fig. 4 zeigt eine Abwandlung der Anordnung nach Fig. 3. Hier ist der Gassensperrzylinder 54 ebenfalls in den Ventilblock integriert und damit die Modularität und Komplexität des Ventilblocks 60 noch erhöht. Das Kupplungspedal 62 betätigt hier einen elektrischen Schalter 64, der mit der Steuereinrichtung 20 verbunden ist. Die Zulassung von Schaltungen im Splitgruppengetriebe 12 wird in dieser Anordnung von der Steuereinrichtung 20 aus bei geschlossenem Schalter 64 bestimmt, wobei an den Ventilen 36 und 38 Luft permanent ansteht.

### Bezugszeichenliste:

- 2: Fahrzeug
- 4: Antriebsmaschine
- 6: Getriebe
- 8: Kupplung
- 10: Hauptgetriebeteil
- 12: Splitgruppengetriebe
- 14: Bereichsgruppengetriebe
- 16: Schalthebel
- 18: Verbindungsleitung
- 20: Steuereinrichtung
- 22: Kippschalter
- 24: Kippschalter
- 26: Verbindungsleitung
- 28: Schaltbild
- 30: Kupplungsauslöseventil
- 32: Leitung
- 34: Luftvorrat
- 36: Ventil
- 38: Ventil
- 40: Schaltzylinder
- 42: Hauptabschaltventil
- 44: Ventil
- 46: Ventil
- 48: Schaltzylinder
- 50: Sensor
- 52: Ventil
- 54: Gassensperrzylinder
- 56: Umlenkhebel
- 58: Schaltwelle
- 60: Ventilblock
- 62: Kupplungspedal
- 64: Schalter

## Patentansprüche

1. Elektro-pneumatische Schalteinheit für ein Fahrzeuggetriebe (6) mit einem über Ventile (36, 38) pneumatisch geschalteten Splitgruppengetriebe (12) und einem über Ventile (44, 46) pneumatisch geschalteten Bereichsgruppengetriebe (14), deren Schaltungen manuell vom Fahrzeugführer an einem Schalthebel (16) vorwählbar sind, mit einer Sperreinrichtung (54, 56) zur mechanischen Unterbindung der manuellen Schaltung nicht zulässiger Übersetzungsverhältnisse des Fahrzeuggetriebes (6), mit einer Einrichtung (30, 42, 64) zur Unterbindung der pneumatischen Schaltung nicht zulässiger Übersetzungsverhältnisse des Fahrzeuggetriebes (6) und mit einer elektronischen Steuereinrichtung (20), **dadurch gekennzeichnet , dass** die Sperreinrichtung (54, 56) zur mechanischen Unterbindung der manuellen Schaltung nicht zulässiger Übersetzungsverhältnisse des Fahrzeuggetriebes (6) pneumatisch mit einem Ventil (44) zur Schaltung des Bereichsgruppengetriebes (14) verbunden ist.

2. Elektro-pneumatische Schalteinheit nach Anspruch 1, **dadurch gekennzeichnet , dass** die Sperreinrichtung (54, 56) pneumatisch mit dem Ventil (44) für die Schaltung der langsame Stellung des Bereichsgruppengetriebes (14) verbunden ist.

## Claims

1. Electropneumatic control element for a vehicle transmission (6) with a splitter unit (12), which is controlled pneumatically via valves (36, 38), with a range-change transmission (14), which is controlled pneumatically via valves (44, 46) and the gearshifts of which can be pre-selected by the driver by means of a manual shift lever (16), with a locking element (54, 56) to mechanically prevent the vehicle transmission (6) from performing manual gearshifts of impermissible ratios, with an installation (30, 42, 64) to prevent the vehicle transmission (6) from performing pneumatic gearshifts of impermissible ratios, and with an electronic control device (20), **characterized in that** the locking element (54, 56) installed to mechanically prevent the vehicle transmission (6) from performing manual gearshifts of impermissible ratios is pneumatically linked to a valve (44) for the shifting operations of the range-change transmission (14).

2. Electropneumatic control element according to claim 1, **characterized in that** the locking element (54, 56) is pneumatically linked to the valve (44) for selection of the low-speed position of the range-change transmission (14).

## Revendications

1. Unité de commande électropneumatique pour une boîte de vitesses d'un véhicule (6) dotée d'un doubleur de gamme (12) actionné par voie pneumatique à l'aide de soupapes (36, 38) et d'un médiateur (14) actionné par voie pneumatique à l'aide de soupapes (44, 46), dont les changements de rapports peuvent être présélectionnés manuellement par le conducteur à l'aide d'un levier de changement de vitesses (16), dotée d'un dispositif de verrouillage (54, 56) permettant l'inhibition mécanique d'un passage manuel de rapports de démultiplication inadmissibles de la boîte de vitesses du véhicule (6), dotée d'un dispositif (30, 42, 64) permettant l'inhibition du passage pneumatique de rapports de démultiplication inadmissibles de la boîte de vitesses du véhicule (6) et dotée d'un dispositif de commande électronique (20), c a r a c t é r i s é e en ce que le dispositif de verrouillage (54, 56) pour l'inhibition mécanique du passage manuel de rapports de démultiplication inadmissibles de la boîte de vitesses du véhicule (6) est lié par voie pneumatique à une soupape (44) pour le passage du médiateur (14).

2. Unité de commande électropneumatique selon la revendication 1, **caractérisée en ce que** le dispositif de verrouillage (54, 56) est lié par voie pneumatique à la soupape (44) pour la sélection de la gamme lente du médiateur (14).
